# EUROPEAN PATENT SPECIFICATION

(11) **EP 3 227 601 B1**
(45) Date of publication and mention of the grant of the patent: **15.12.2021**
(21) Application number: 15825876.4
(22) Date of filing: 01.10.2015
(51) Int. Cl.: F21Y 115/10, F21S 10/00, F21K 9/62, G02B 27/09, G02B 19/00, F21Y 113/13

(54) **COLLIMATION AND HOMOGENIZATION SYSTEM FOR AN LED LUMINAIRE**
KOLLIMIERUNGS- UND HOMOGENISIERUNGSSYSTEM FÜR EINE LED-LEUCHTE
SYSTÈME DE COLLIMATION ET D'HOMOGÉNÉISATION POUR LUMINAIRE À DEL

(30) Priority: 01.10.2014 US 201462058566 P
(43) Date of publication of application: 11.10.2017
(73) Proprietor: Robe Lighting s.r.o., 756 61 Roznov pod Radhostem (CZ)
(72) Inventor: JURIK, Pavel, Prostredni Becva, 75656 (CZ); VALCHAR, Josef, Prostredni Becva, 75656 (CZ)
(74) Representative: Murgitroyd & Company
(86) International application number: PCT/US2015/053557
(87) International publication number: WO 2016/054410

(56) References cited:
- EP-A1- 2 770 251
- WO-A1-2012/004760
- WO-A1-2012/083957
- WO-A2-2014/031641
- JP-A- 2006 162 878
- US-A- 5 188 452
- US-A1- 2001 007 527
- None

## Description

### TECHNICAL FIELD OF THE INVENTION

### TECHNICAL FIELD OF THE INVENTION

The present invention generally relates to a method for controlling the light output from an array of LEDs when used in a light beam producing luminaire, specifically to a method relating to improving the homogenization and collimation of the LEDs and for controlling the beam angle of the array.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will typically provide control over the pan and tilt functions of the luminaire allowing the operator to control the direction the luminaire is pointing and thus the position of the light beam on the stage or in the studio. This position control is often done via control of the luminaire's position in two orthogonal rotational axes usually referred to as pan and tilt. Many products provide control over other parameters such as the intensity, color, focus, beam size, beam shape and beam pattern. Additionally it is becoming common to utilize high power LEDs as the light source in such luminaires and, for color control, it is common to use an array of LEDs of different colors. For example a common configuration is to use a mix of Red, Green and Blue LEDs. This configuration allows the user to create the color they desire by mixing appropriate levels of the three colors. For example illuminating the Red and Green LEDs while leaving the Blue extinguished will result in an output that appears Yellow. Similarly Red and Blue will result in Magenta and Blue and Green will result in Cyan. By judicious control of the LED controls the user may achieve any color they desire within the color gamut set by the LED colors in the array. More than three colors may also be used and it is well known to add an Amber or White LED to the Red, Green and Blue to enhance the color mixing and improve the gamut of colors available. The products manufactured by Robe Show Lighting such as the Robin 600 LEDWash are typical of the art.

The differently colored LED dies may be arranged on packages in the luminaire such that there is physical separation between each color of LED, and this separation, coupled with differences in die size for each color, may affect the spread of the individual colors and results in inadequate mixing of the different colors along with objectionable spill light and color fringing of the combined mixed color output beam. It is common to use a lens or other optical device in front of each LED package to control the beam shape and angle of the output beam; however these optical devices may have differing effect for different colors and color fringing or other aberrations may be visible in the output beam. It would be advantageous to have a system where stray light and aberrations are well controlled.

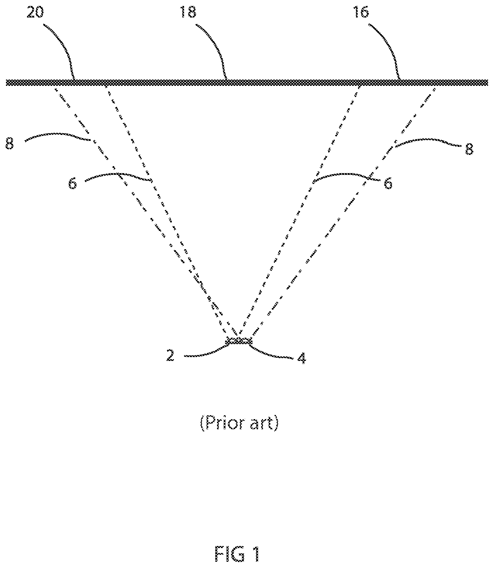

**Figure 1** illustrates a prior art system showing two LEDs in a package as may be used in a luminaire. LED **2** and LED **4** may be of differing colors and, due to the different optical properties and construction of the LED dies **2**, **4** produce light beams **6** and **8** that differ in beam spread. The differing beam spreads mean that the light beams from LEDs **2** and **4** will impinge on an illuminated object **18** in such a way that areas **20** and **16** of the object are illuminated by a single LED only rather than the desired mix of both. This results in areas **20** and **16** being colored differently from the central mixed area and appearing as colored fringes. Only Two (2) LEDs are illustrated in **Figure 1** for clarity and simplicity. It should be appreciated that the same problem exists with systems incorporating more than two colors of LED.

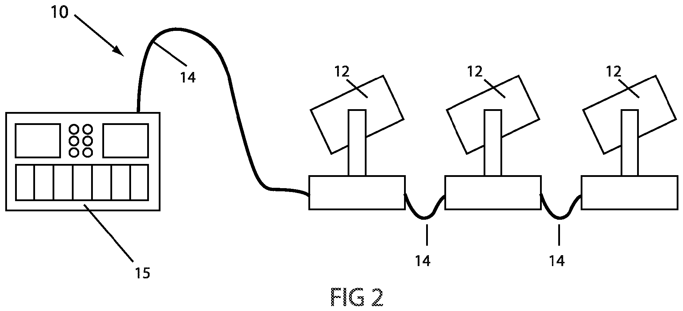

**Figure 2** illustrates a typical multiparameter automated LED luminaire system **10**. These systems commonly include a plurality of multiparameter automated luminaires **12** which typically each contain on-board an array of LEDs, and electric motors coupled to mechanical drives systems and control electronics (not shown). In addition to being connected to mains power either directly or through a power distribution system (not shown), each luminaire is connected is series or in parallel to data link **14** to one or more control desk(s) **15**. The luminaire system **10** is typically controlled by an operator through the control desk **15**. Consequently, to affect this control, both the control desk **10** and the individual luminaires typically include electronic circuitry as part of the electromechanical control system for controlling the automated lighting parameters.

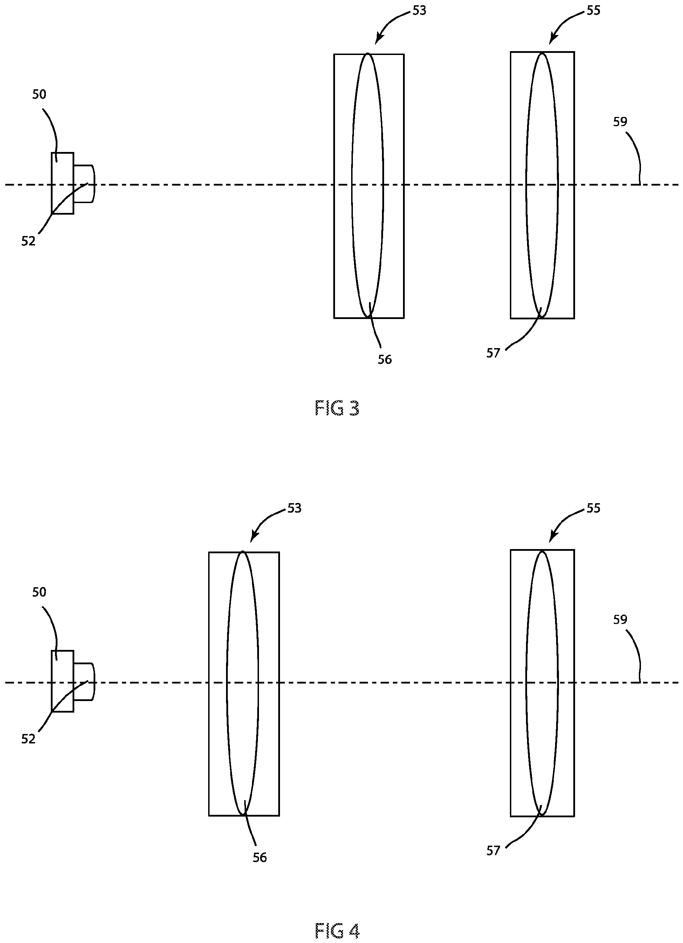

**Figure 3** and **Figure 4** illustrate an optical system used in the prior art to provide a variable beam angle or zoom to an automated LED luminaire. Each LED **50** which may be fitted with a primary optic **52** has an associated pair of lenses **53** and **55**. Lenses **53** and **55** may be separate lenses or each part of an array of lenses covering the entire LED array. Lenses **53** and **55** may each comprise a single optical element **56** and **57** respectively. In operation at least one of lens **53** or lens **55** is stationary with respect to LED **50** while the other may move along optical axis **59**. In the example illustrated in Figures 3 and 4 lens **55** is fixed relative to LED **50** while lens **53** is able to move along optical axis **59**. **Figure 3** shows lens **53** in a first position and **Figure 4** shows lens **53** in a second position closer to LED **50**. This varying relative position between LED **50**, lens **53** and lens **55** provides a beam angle or zoom to the light beam from LED **50**. Such systems are often limited in their zoom range by optical problems caused by the color separation and inadequate beam homogenization. They may further be limited by requiring large movements of the lenses.

The document WO 2014/031641 A2 describes a luminaire with an articulated elongated light beam homogenizer. The homogenizer is remotely selectable by a user whereby the articulation inserts the homogenizer into the light path or removes the homogenizer from the light path. Optical elements in form of gobos can furthermore be provided in the light path.

The document WO 2012/004760 A1 relates to a luminaire that includes a light emitting diode chip, an optical conductor providing mixing of light, a collector lens receiving mixed light from the optical conductor and a zoom subassembly that is movable coaxially with respect to the collector lens.

This is a need for an optical system for an LED automated luminaire which provides improved color homogenization and beam collimation while also providing improved zoom range.

### SUMMARY

The invention is defined in the independent claim 1. Accordingly there is provided an automated luminaire in accordance with claim 1.

The dependent claims describe further arrangements of the invention. It will be appreciated that the scope is in accordance with the claims. It will be appreciated that the specification may include further arrangements outside the scope of the claims provided as background and to assist in understanding the invention.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
**FIGURE 1** illustrates a prior art LED lighting system;
**FIGURE 2** illustrates a typical automated lighting system;
**FIGURE 3** illustrates optical components of a prior art LED luminaire;
**FIGURE 4** illustrates optical components of a prior art LED luminaire;
**FIGURE 5** illustrates optical components of an embodiment of the LED luminaire;
**FIGURE 6** illustrates a front view of the collimating and mixing optic **80** and LED **60** of **Figure 5**;
**FIGURE 7** illustrates a front view of the light integrator **102** of **Figure 5**;
**FIGURE 8** illustrates a further embodiment of the embodiment illustrated in **Figure 5****;**
**FIGURE 9** illustrates an alternative embodiment of the LED luminaire;
**FIGURE 10** illustrates a front view of the collimating and mixing optic **80** and LED **60** of **Figure 5**;
**FIGURE 11** illustrates a front view of the light integrator **102** of **Figure 5**;
**FIGURE 12** illustrates a further embodiment of the embodiment illustrated in **Figure 5****;**
**FIGURE 13** illustrates an alternative embodiment of the LED luminaire illustrated in **Figure 5**;
**FIGURE 14** illustrates an alternative embodiment of the LED luminaire illustrated in **Figure 9**;
**FIGURE 15** illustrates an alternative embodiment of the LED luminaire with light spill reducing element;
**FIGURE 16** illustrates an alternative embodiment of an optical element;
**FIGURE 17** illustrates an alternative embodiment of the optical element;
**FIGURE 18** illustrates an embodiment of the light integrator;
**FIGURE 19** illustrates an alternative embodiment of the light integrator;
**FIGURE 20** illustrates an embodiment of the light integrator fitted with a gobo or pattern wheel;
**FIGURE 21** illustrates an alternative embodiment of the light integrator fitted with a gobo or pattern wheel;
**FIGURE 22** illustrates an alternative embodiment of the light integrator fitted with a gobo or pattern wheel;
**FIGURE 23** illustrates an embodiment of the light integrator fitted with a gobo or pattern wheel;
**FIGURE 24** illustrates an embodiment of the light integrator fitted with a static gobo or pattern wheel and a rotating gobo or pattern wheel;
**FIGURE 25** illustrates an example of a full static gobo wheel;

**FIGURE 26** illustrates an example of a full rotating gobo wheel;
**FIGURE 27** illustrates an alternative example of a full static gobo wheel;
**FIGURE 28** illustrates an example of a partial static gobo wheel;
**FIGURE 29** illustrates an embodiment of an array of light integrators of the invention, each fitted with a partial gobo wheel;
**FIGURE 30** illustrates an alternative embodiment of the light integrator fitted with a static gobo or pattern wheel and a rotating gobo or pattern wheel; and;
**FIGURE 31** illustrates an alternative embodiment of the light integrator fitted with a static gobo or pattern wheel and a rotating gobo or pattern wheel.

### DETAILED DESCRIPTION OF THE INVENTION

Preferred embodiments of the present invention are illustrated in the FIGURES, like numerals being used to refer to like and corresponding parts of the various drawings.

The present invention generally relates to a method for controlling the light output from an array of LEDs when used in a light beam producing luminaire, specifically to a method relating to improving the homogenization and collimation of the LEDs and for controlling the beam angle of the array.

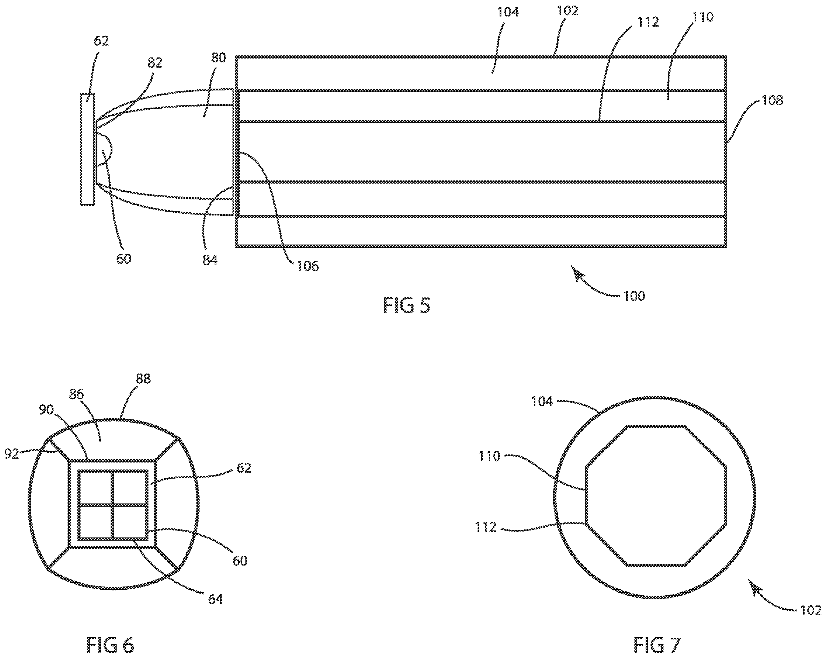

**Figure 5** illustrates an embodiment of the optical system of the invention. LED **60**, which may include a primary optic, is mounted on substrate **62**. LED **60** may contain a single color die or may contain multiple dies, each of which may be of differing colors. The light output from the dies in LED **60** enters collimating and mixing optic **80** at light entry port **82**. Collimating and mixing optic **80** may be a solid optic using total internal reflection (TIR) to direct the light or may be a hollow reflective surface. Collimating and mixing optic **80** may have four sides **86**, each of which may be curved with cornered sides **92**. The end view of collimating and mixing optic **80** in **Figure 6** combined with side illustration of the collimating and mixing optic **80** in **Figure 5** illustrate details an embodiment of the shape. The combination square sided shape with curved sides provides excellent mixing of the light from the dies **64** in LED **60**. A further feature of collimating and mixing optic **80** is that it directs the reflected light to an external focal point which is comparatively close to its output port **84** of the collimating and mixing optic **80**.

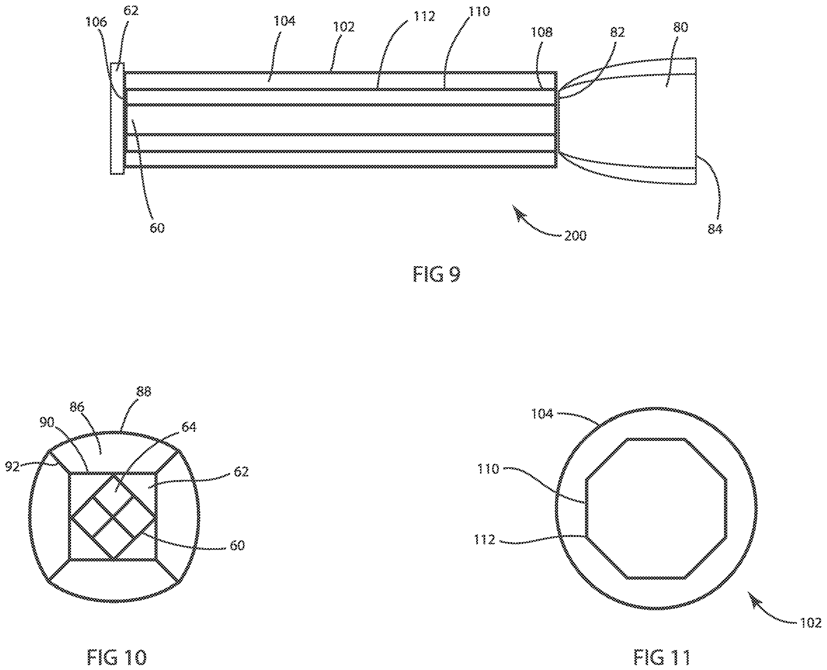

In the embodiments illustrated in **Figure 6** the configuration of the plurality of LED dies **64** in **LED 60** is square and aligned with the sides **86** of the collimator **80**. In other embodiments the alignment of the dies with the collimator sides may not be aligned, for example as illustrated in **Figure 10**. In alternative embodiments of those illustrated in **Figure 6** and **Figure 10** the collimator may have a plurality of slides of three four or more sides. In further embodiments the arrangement of the dies in the LED array may be configured in different shapes and paired with collimators with matching or divergent shapes.

In different embodiments degree of curvature of the sides **86** may vary ― flatter for some configurations and more curved for other configurations. Additionally, the sharpness of the corners **92** between the sides may vary among different collimators ― sharper for some configurations and rounder for others. The selection of the number of sides and the curvature of the sides and curvature of the corners is/arc tradeoffs between the degree of mixing desired and acceptable light loss for a particular configuration or application.

In the embodiment shown in **Figure 5**, the reflected light exits collimating and mixing optic **80** at port **84** and enters light integrator optic **102** at its entry port **106**. Light integrator **102** is a device utilizing internal reflection so as to collect, homogenize and constrain and conduct the light from collimating and mixing optic **80**. Light integrator **102** may be a hollow tube with a reflective inner surface such that light impinging into the entry port may be reflected multiple times along the tube before leaving at the exit port **108**. Light integrator **102** may be a square tube, a hexagonal tube, a heptagonal tube, an octagonal tube, a circular tube, or a tube of any other cross section. In a further embodiment light integrator **102** may be a solid rod constructed of glass, transparent plastic or other optically transparent material where the reflection of the incident light beam within the rod is due to total internal reflection (TIR) from the interface between the material of the rod and the surrounding air. The integrating rod may a square rod, a hexagonal rod, a heptagonal rod, an octagonal rod, a circular rod, or a rod of any other cross section. Integrator embodiments with a polygonal cross section have reflective sides **110** and corners **112** between the reflective sides as seen in **Figure 5** which includes a side cross sectional view of the integrator **102** and more easily seen in **Figure 7** a front exit port view of the integrator **102**.

In a yet further embodiment the light integrator **102** may have a straight sided square cross section at the entrance port and a straight sided polygonal cross section with more than four sides at the exit port. The exit port may be pentagonal, hexagonal, heptagonal, octagonal, or have any other integral number of sides.

A feature of a light integrator **102** which comprises a hollow or tube or solid rod where the sides of the rod or tube are essentially parallel and the entrance aperture **106** and exit aperture **108** are of the same size is that the divergence angle of light exiting the integrator **102** at exit port **108** will be the same as the divergence angle for light entering the integrator **102** at entry port **106**. Thus a parallel sided integrator **102** has no effect on the beam divergence and will transfer the position of the focal point of collimating and mixing optic **80** at its exit aperture **84** to the integrator's **102** exit aperture **108**. The light exiting integrator **102** will be well homogenized with all the colors of LED **60** mixed together into a single colored light beam and may be used as our output, or may be further modified by downstream optical systems.

Integrator **102** may advantageously have an aspect ratio where its length is much greater than its diameter. The greater the ratio between length and diameter, the better the resultant mixing and homogenization will be. Integrator **66** may be enclosed in a tube or sleeve **104** which provides mechanical protection against damage, scratches, and dust.

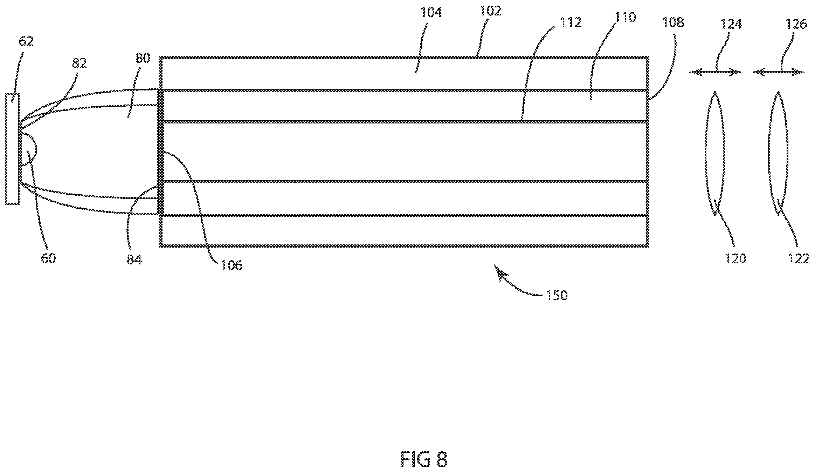

**Figure 8** illustrates a further embodiment of the invention. Elements LED **60**, substrate **62**, collimating and mixing optic **80**, integrator **102**, are as described above for **Figure 5, Figure 6 and Figure 7**. In this embodiment the homogenized and focused light exiting from integrator **66** is directed through lens system **120** and **122**. Lenses **120** and **122** may be independently movable **124** and **126** along the optical axis so as to provide beam angle control over the light beam. Because the focal point of collimating and mixing optic **80** is short, a small motion of lenses **120** and **122** may cause a large change in beam angle. In one embodiment movements **124 126** of 10 mm in the position of lenses **120** and/or **122** may cause a change in beam angle from 5° to 50°. Thus providing an improved variable beam angle or zoom to an automated LED luminaire.

In further embodiments, lenses **120** and **122** may form an achromatic optical system such that it provides the same degree of beam angle change to long wavelength red light as it does to short wavelength blue light and thus avoids chromatic aberration. This ensures that the beams from the different colors of LED dies **64** in LED **60** are all the same size resulting in a uniformly colored combined beam. In yet further embodiments any number of lenses may be used as the lens system. In all cases, lenses may contain one or more optical elements. Lenses **120** and **122** are illustrated herein as bi-convex lenses however the invention is not so limited and lenses **120** and **122** may be any shaped optical element as well known in the art.

**Figure 9** illustrates an embodiment of the optical system of the invention. LED **60**, which may include a primary optic, is mounted on substrate **62**. LED **60** may contain a single color die **64** or may contain multiple dies **64**, each of which may be of differing colors. The light output from the dies **64** in LED **60** enters light integrator optic **102** at entry port **106**. Light integrator 102 may be of the same construction and configuration as in the embodiment illustrated in **Figure 5**. Light integrator **102** is a device utilizing internal reflection so as to collect, homogenize and constrain and conduct the light to the entry port **82** of collimating and mixing optic **80**. Light integrator **102** may be a hollow tube with a reflective inner surface such that light impinging into the entry port **106** may be reflected multiple times along the tube before leaving at the exit port **108**. Light integrator **102** may be a square tube, a hexagonal tube, a heptagonal tube, an octagonal tube, a circular tube, or a tube of any other cross section. In a further embodiment light integrator **102** may be a solid rod constructed of glass, transparent plastic or other optically transparent material where the reflection of the incident light beam within the rod is due to total internal reflection (TIR) from the interface between the material of the rod and the surrounding air. The integrating rod may a square rod, a hexagonal rod, a heptagonal rod, an octagonal rod, a circular rod, or a rod of any other cross section.

A feature of a light integrator **102** which comprises a hollow or tube or solid rod where the sides of the rod or tube are essentially parallel and the entrance aperture **106** and exit aperture **108** are of the same size is that the divergence angle of light exiting the integrator **102** exit port **108** will be the same as the divergence angle for light entering the integrator **102** at entry port **106** from LED **60**. Thus a parallel sided integrator **102** has no effect on the beam divergence and will transfer the light from LED **60** to its exit aperture **108**. The light exiting integrator **102** will be well homogenized with all the colors of LED **60** mixed together into a single colored light beam.

Integrator **102** may advantageously have an aspect ratio where its length is much greater than its diameter. The greater the ratio between length and diameter, the better the resultant mixing and homogenization will be. Integrator **102** may be enclosed in a tube or sleeve **104** which provides mechanical protection against damage, scratches, and dust.

Light exiting integrator **102** at exit port **108** enters collimating and mixing optic **80** at its entry port **82**. Collimating and mixing optic **80** may be of the same construction and configuration as the collimating and mixing optic in embodiment illustrated in **Figure 5****.** Collimating and mixing optic **80** may be a solid optic using total internal reflection (TIR) to direct the light or may be a hollow reflective surface. Collimating and mixing optic **80** may have four sides, each of which may be curved. The side view of collimating and mixing optic **80** included in **Figure 9** and the end view of collimating and mixing optic **80** in **Figure 10** illustrate the detail of this shape. The combination square sided shape with curved sides provides further mixing of the light from the dies in LED **60** as homogenized by integrator **102**. A further feature of collimating and mixing optic **80** is that it directs the reflected light to an external focal point which is comparatively close to its output face.

In the embodiment shown in **Figure 9** the reflected light exits collimating and mixing optic **80** at exit port **84** and may be used as our output, or may be further modified by downstream optical systems.

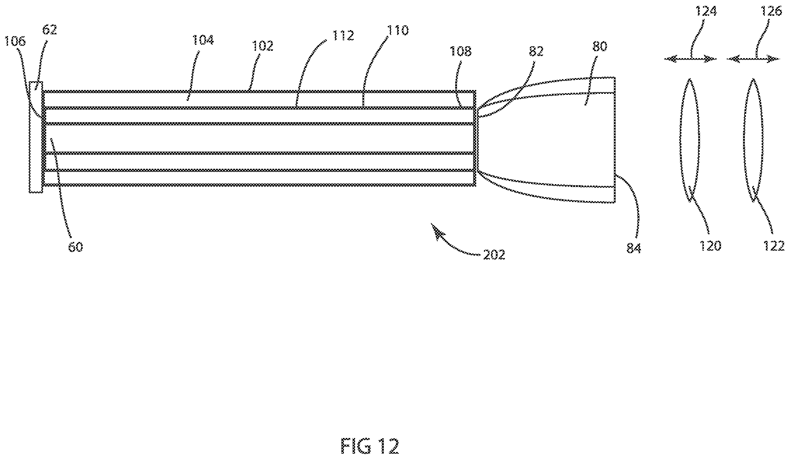

**Figure 12** illustrates a further embodiment of the invention. Elements LED **60**, substrate **62**, collimating and mixing optic **80**, integrator **102**, can be as described above. In this embodiment the homogenized and focused light exiting from collimating and mixing optic **80** is directed through lens system **120** and **122**. Lenses **120** and **122** may be independently movable along the optical axis so as to provide beam angle control over the exiting light beam. Because the focal point of collimating and mixing optic **80** is short, a small motion of lenses **120** and **122** may cause a large change in beam angle. In one embodiment a movement of 10 mm in the position of lenses **120** and/or **122** may cause a change in beam angle from 5° to 50°. Thus providing an improved variable beam angle or zoom to an automated LED luminaire.

In further embodiments, lenses **120** and **122** may form an achromatic optical system such that it provides the same degree of beam angle change to long wavelength red light as it does to short wavelength blue light and thus avoids chromatic aberration. This ensures that the beams from the different colors of LED dies in LED **60** are all the same size resulting in a uniformly colored combined beam. In yet further embodiments any number of lenses may be used as the lens system. In all cases, lenses may contain one or more optical elements. Lenses **120** and **122** arc illustrated herein as bi-convcx lenses however the invention is not so limited and lenses **120** and 1**22** may be any shaped optical element as well known in the art and may include any number of lenses including a single lens. This applies to any of the embodiments discussed above

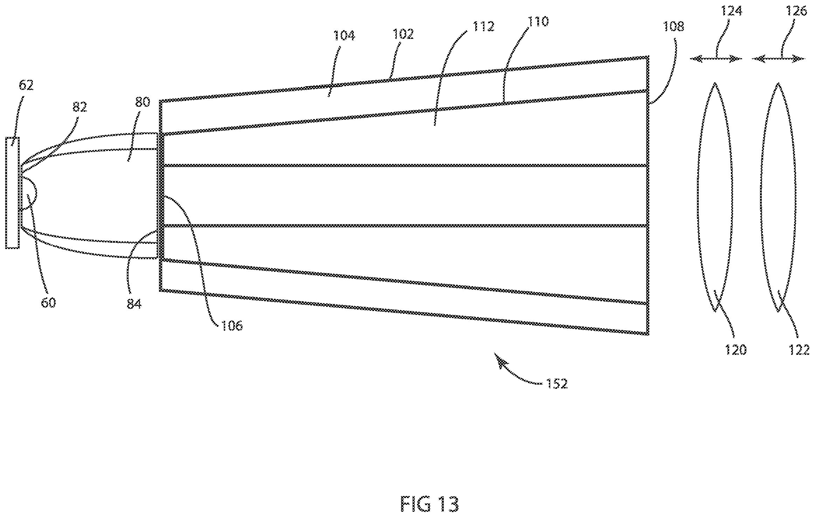

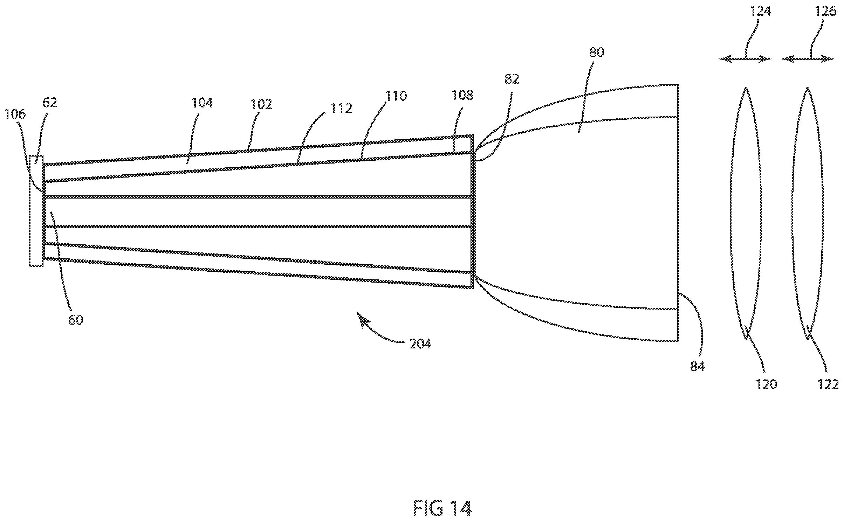

**Figure 13** and **Figure 14** illustrate further alternative embodiments of LED luminaires. In both of these embodiments the light integrator **102**, whether solid or hollow, has sides **110** which are tapered so that entrance aperture **106** is smaller than the exit aperture **108**. The advantage of this structure is that the divergence angle of light exiting the integrator **102** at exit port **108** will be smaller than the divergence angle for light entering the integrator **102** at entry port **106**. The combination of a smaller divergence angle from a larger aperture serves to conserve the etendue of the system. Thus a tapered integrator **102** may provide similar functionality to a condensing optical system. Therefore some embodiments may not include optical elements **120 122** as discussed above while other embodiments may include such elements as discussed above with regard to embodiments with non-tapered integrators.

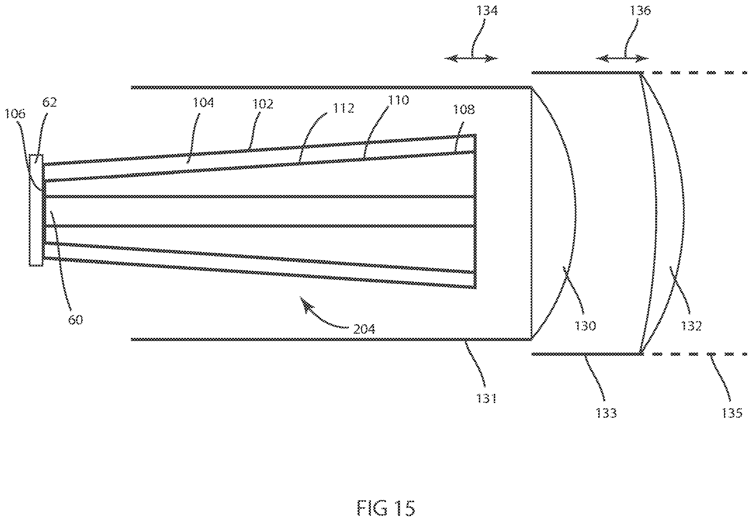

**Figure 15** illustrates a further alternative embodiment of LED luminaires. In this embodiment the light integrator **102**, whether solid or hollow, and with any number of sides, or with a square entry port **106** and a polygonal exit port **108** has sides **110** which are tapered so that entrance aperture **106** is smaller than the exit aperture **108**. The advantage of this structure is that the divergence angle of light exiting the integrator **102** at exit port **108** will be smaller than the divergence angle for light entering the integrator **102** at entry port **106**. The combination of a smaller divergence angle from a larger aperture serves to conserve the etendue of the system. Thus a tapered integrator **102** may provide similar functionality to a condensing optical system. Therefore some embodiments may not include optical elements **120 122** as discussed above while other embodiments may include such elements as discussed above with regard to embodiments with non-tapered integrators. Additionally this embodiment may alternately utilize lenses **130** and **132** as optical elements providing condensing, beam angle control, and focusing functionality as described above as a replacement for the collimating and mixing optic used in earlier embodiments. Lenses **130** and **132** may be meniscus lenses, plano convex lenses, bi-convex lenses, or other lenses as well known in the art. In the embodiment illustrated lens **130** is a plano-convex lens, and lens 132 is a meniscus lens.

**Figure 15** also shows spill reducing elements **131** and **133**. Spill reducing elements **131** and **133** may comprise hollow opaque thin walled tubes which are attached to, and move with, optical elements **130** and **132** respectively. These tubes reduce light spill from the exit port **108** which may impinge on adjacent light integrators and their associated optical systems. Spill reducing element **131**
is of a smaller
diameter than spill reducing element **133** such that optical element **130** and its attached spill reducing element **131** may move within spill reducing element **133** such that optical elements **130** and **132** may move to be adjacent. An external further additional spill reducing element **135** may also be added to and may move with lens **132**. Lenses **130** may be moved as shown by arrow **134**, and lens **132** may be moved as shown by arrow **136**. Such movement allows changing the focal length, and thus the beam angle of the output light beam. Lenses **130** and **132** may move together as a pair with a single actuator, or, in a further embodiment, may move independently each with its own actuator.

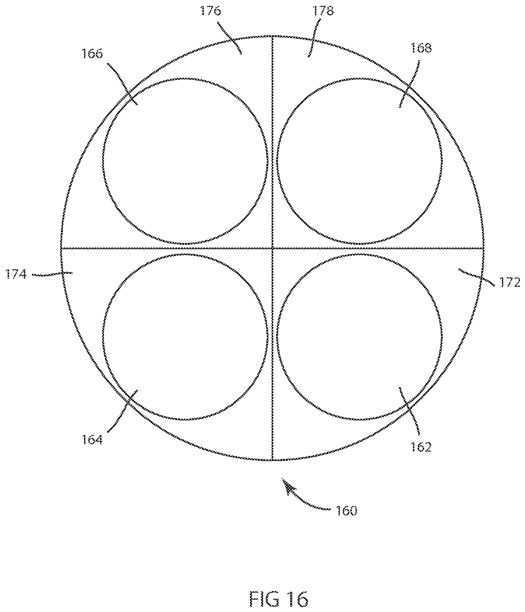

**Figure 16** shows an alternative embodiment of the layout of the front optical elements of the system. In, for example **Figure 15**, there is a front optical element **132** which forms the final output lens of the system. **Figure 16** shows a front view of four of the systems **204** shown in **Figure 15** mounted in a square array. In this embodiment the four optical elements **162**, **164**, **166**, and **168** in **Figure 16** each represent an identical example of element **132** in **Figure 15**. Optical element **162** is constructed as part of a larger, quadrant shaped, structure **172**. Structure **172** incorporating optical element **162** may be molded from a single piece of glass or optical plastic. Similarly optical element **164** is incorporated as part of quadrant **174**, optical element **166** is incorporated as part of quadrant **176**, and optical element **168** is incorporated as part of quadrant **178**. The incorporation of the optical elements in to quadrants provides two desirable results. Firstly, four modules may be placed in a square array while representing an unbroken and clean appearance from the front with the four quadrants joining to provide a complete circle. Secondly, any remaining spill light from the optical modules will disperse and dissipate within the areas of the quadrants outside the optical elements, providing an attractive light glow between the optical elements.

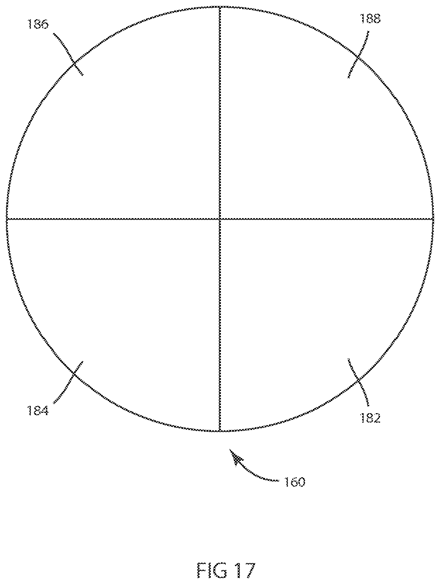

**Figure 17** shows a further alternative embodiment of the layout of the front optical elements of the system. In, for example **Figure 15**, there is a front optical element **132** which forms the final output lens of the system. **Figure 16** shows a front view of four of the systems **204** shown in **Figure 15** mounted in a square array. In this embodiment the four optical elements **182**, **184**, **186**, and **188** in **Figure 17** each represent an identical example of element **132** in **Figure 15** molded into a quadrant shape. The configuration of the optical elements as quadrants provides two desirable results. Firstly, four modules may be placed in a square array while representing an unbroken and clean appearance from the front with the four quadrants joining to provide a complete circle. Secondly, any remaining spill light from the optical modules will disperse and dissipate within the areas of the quadrants outside the optical elements, providing an attractive light glow between the optical elements.

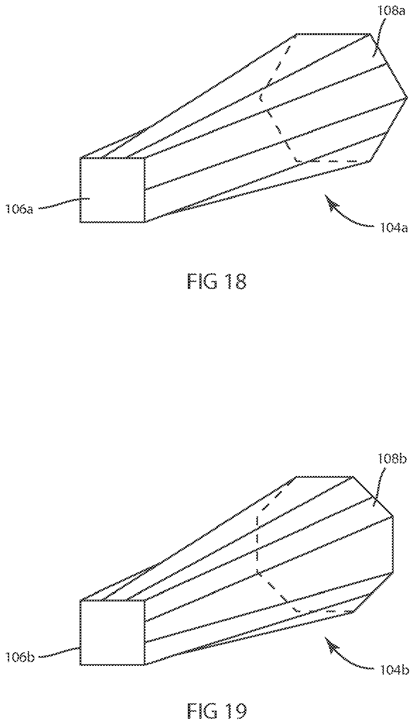

**Figure 18** illustrates an embodiment of the light integrator **104a** of the invention. In this embodiment entrance port **106a** is square in cross-section and exit port **108a** is hexagonal in cross-section.

**Figure 19** illustrates an alternative embodiment of the light integrator 104b of the invention. In this embodiment entrance port 106b is square in cross-section and exit port 108b is octagonal in cross-section.

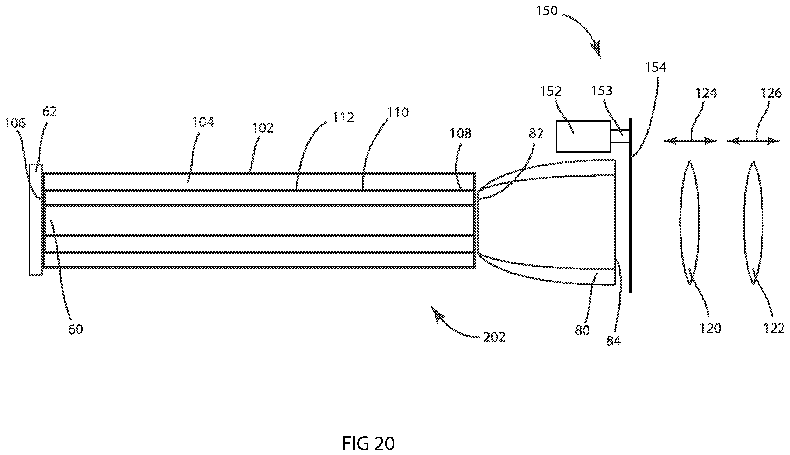

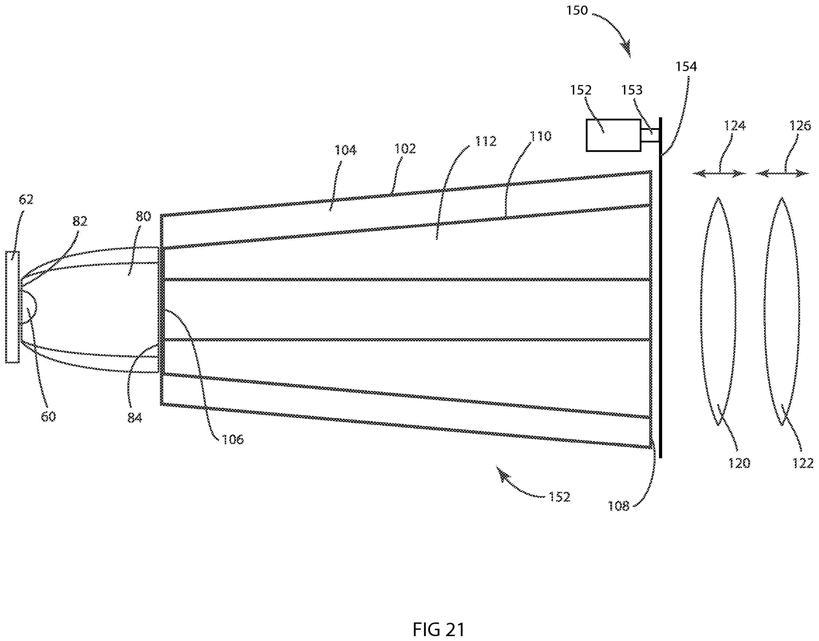

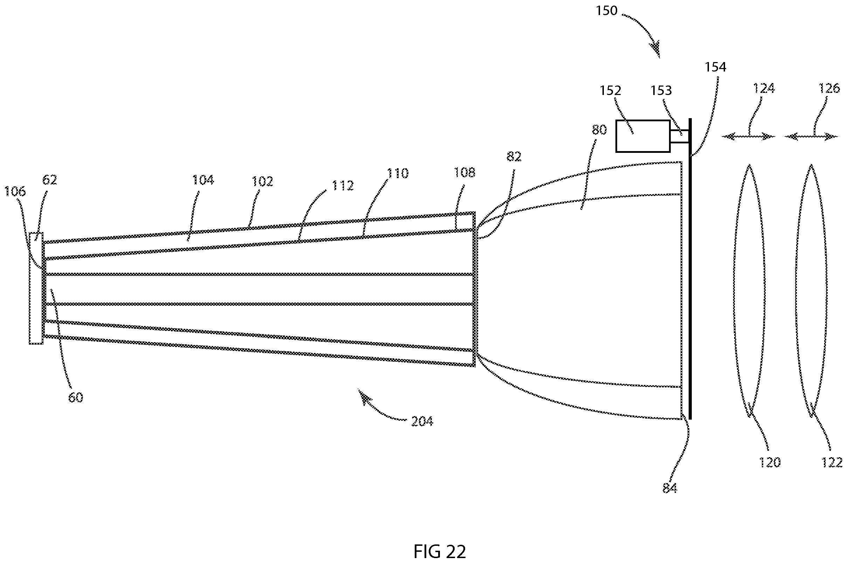

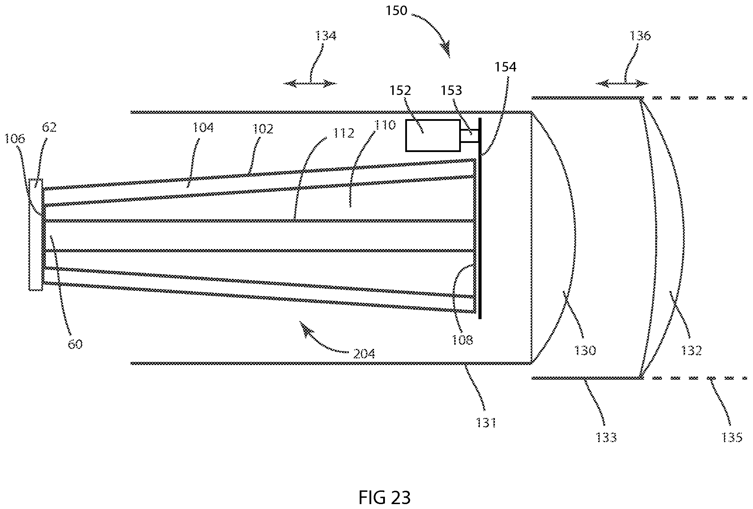

In the alternative embodiments illustrated in **Figures 20**, **21**, **22**, **and** **23** the optical system is further fitted with a gobo wheel system **150**. A gobo wheel contains patterns or images that will controllably mask the light exiting through port **84**. These images will then be projected by downstream optical elements to create a pattern projecting light beam. The lens system after the gobo wheel may be a zoom lens system **120** and **122** such as shown in **Figure 20** or any other projecting lens system as well known in the art. Gobo wheel **154** may be rotated through motor **152** and shaft **153** in order to select different gobo patterns in front of exit aperture **84**. Gobo wheel system **150** may incorporate a static gobo wheel, a rotating gobo wheel, or both. The static gobo wheel or rotating gobo wheel may each be a full wheel, or a partial wheel.

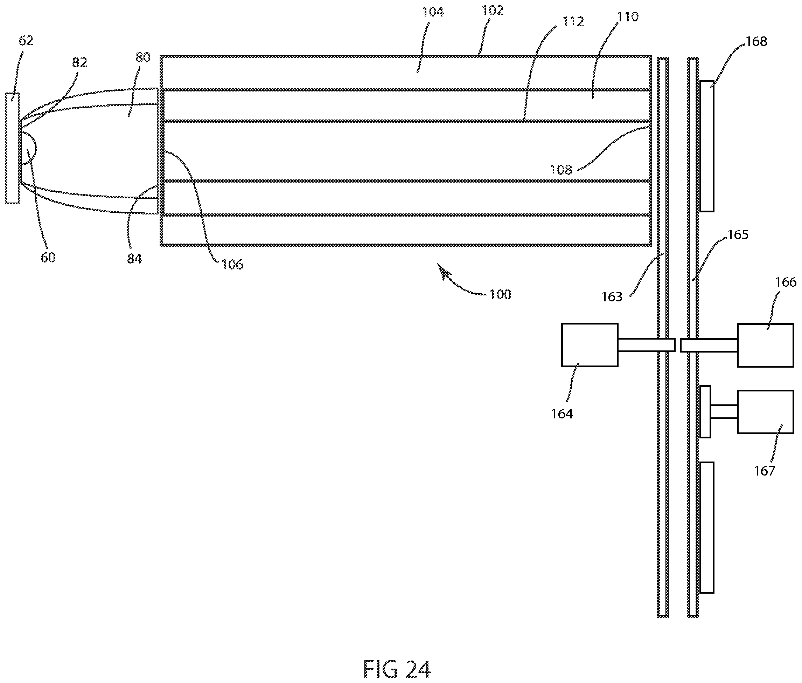

**Figure 24** illustrates both a full static gobo wheel and a full rotating gobo wheel as fitted to an embodiment of the invention. Gobo wheel **163** may be rotated through motor **164** in order to select different gobo patterns in front of exit aperture **108**. In yet further embodiments individual gobo patterns may be further rotated about their axes by supplementary motors in order to provide a moving rotating image. Such rotating gobo wheels arc well known in the art. Rotating gobo wheel, **165**, is an example of such an embodiment. Rotating gobo wheel **165** may be rotated through motor **166** in order to select different gobo patterns **168** in front of exit aperture **108**. Gobo patterns **168** may then be rotated about the optical axis of the system through motor **167**.

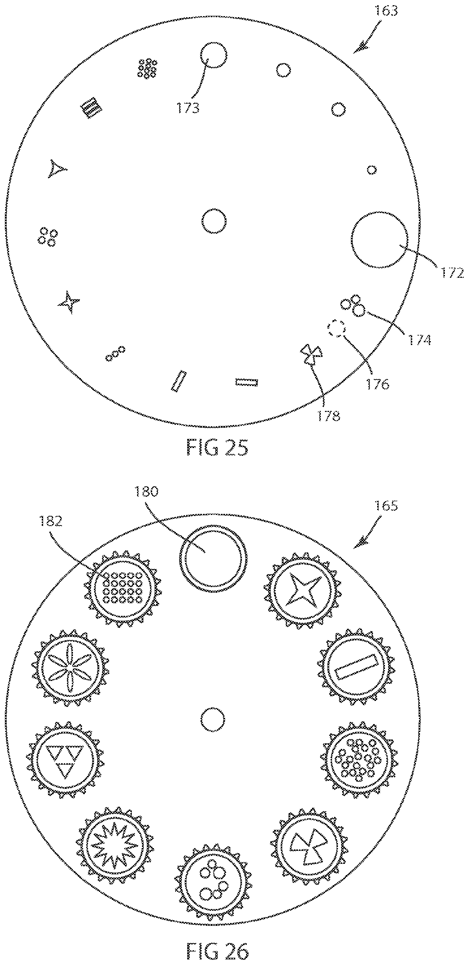

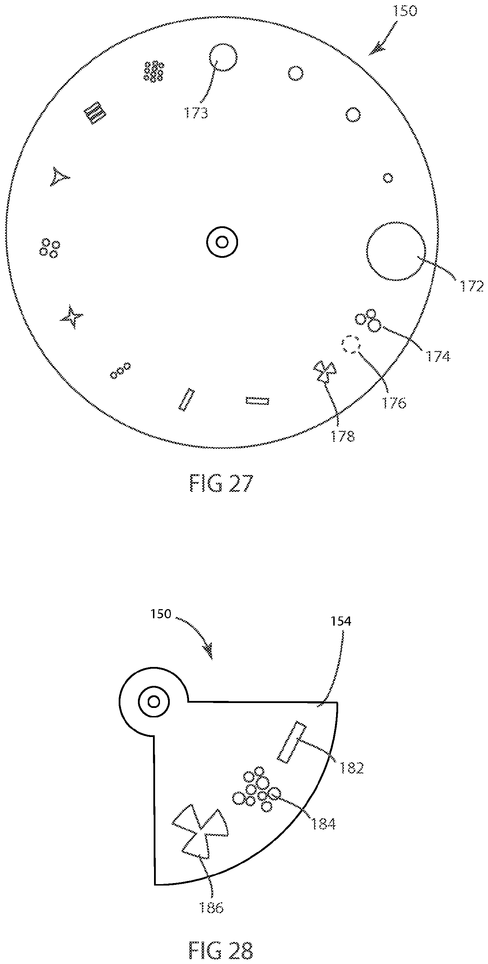

**Figure 25** shows gobo wheel **163** in more detail in a further embodiment of the invention. Gobo wheel **163** contains a plurality of patterns including, for example, **172**, **17**3**, 174**, **176**, and **178** that may be moved across and in front of the exit port of the light integrator by rotation about motor **164**. **Figure 26** shows rotating gobo wheel **165** in more detail in a further embodiment of the invention. Gobo wheel **165** contains a plurality of patterns including, for example, **182** that may be moved across and in front of the exit port of the light integrator by rotation about motor **166**. These gobo patterns may then be rotated about the optical axis of the system through motor **167**. **Figure 27** shows gobo wheel **150** in more detail in a further embodiment of the invention. Gobo wheel **150** contains a plurality of patterns including, for example, **172**, **173**, **174**, **176**, and **178** that may be moved across and in front of the exit port of the light integrator by rotation about motor **164**.

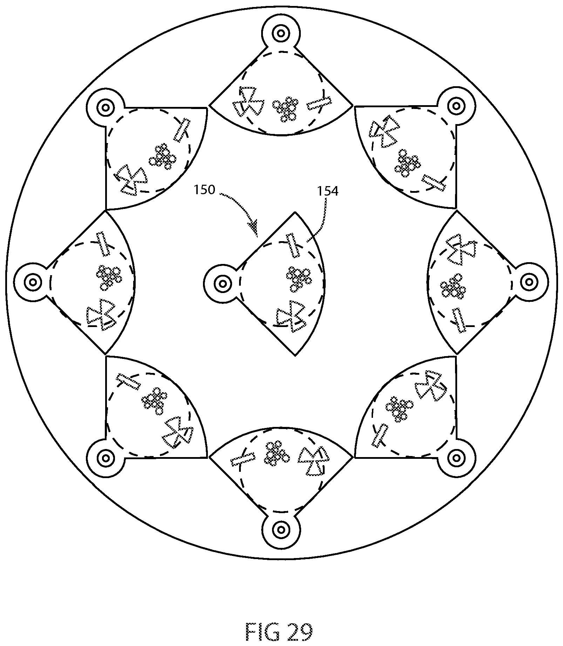

In further embodiments the gobo wheel may not be a complete circular disc as shown in **Figure 27**, but may be a portion of a disc, or a flag so as to save space and provide a more limited number of gobo options. **Figure 28** illustrates an embodiment of a partial gobo wheel where gobo wheel **154** is a quadrant of a circle containing three gobos, **182**, **184**, and **186**. Such an arrangement with a partial wheel facilitates embodiments such as that illustrated in **Figure 29** where multiple light integrators are utilized in a single luminaire. Each of those light integrators may be fitted with an independent gobo system **150**, all or any of which may be individually or cooperatively controlled. Utilizing partial wheels **154** may allow a tighter packing density for the light integrators and optical systems without interference between the adjacent wheels. In the example illustrated nine light integrators and associated gobo systems **150** are utilized in a circular arrangement. However, the invention is not so limited and any number of light integrators in any arrangement may be utilized without departing from the invention. Additionally, it is not necessary that every light integrator is fitted with a gobo system; embodiments may be constructed where a proportion of the light integrators is fitted with gobo systems, and a proportion is not.

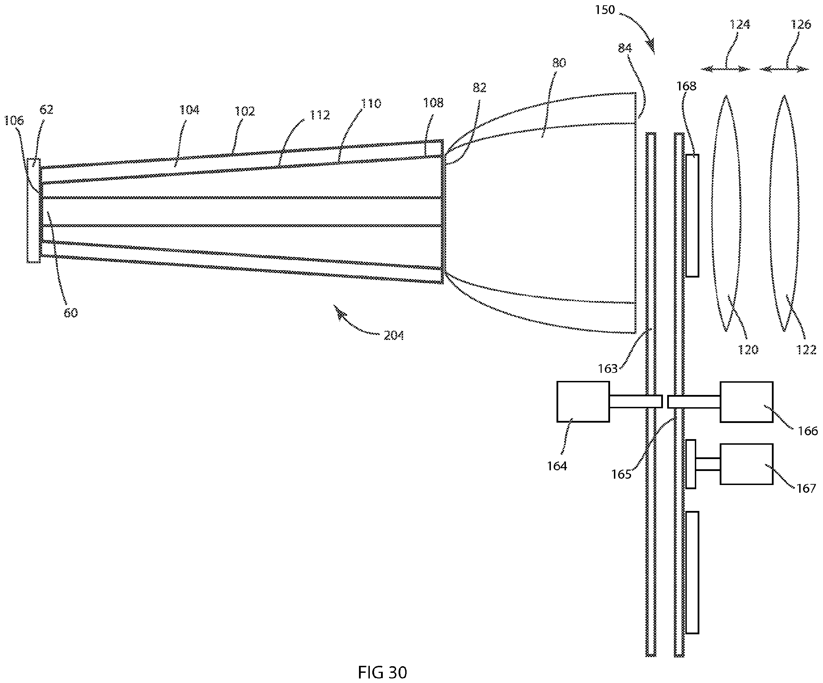

**Figure 30** illustrates both a full static gobo wheel and a full rotating gobo wheel as fitted as gobo system **150** to an alternative embodiment of the invention. Gobo wheel **163** may be rotated through motor **164** in order to select different gobo patterns in front of exit aperture **84**. In yet further embodiments individual gobo patterns may be further rotated about their axes by supplementary motors in order to provide a moving rotating image. Such rotating gobo wheels are well known in the art. Rotating gobo wheel, **165**, is an example of such an embodiment. Rotating gobo wheel **165** may be rotated through motor **166** in order to select different gobo patterns **168** in front of exit aperture **108**. Gobo patterns **168** may then be rotated about the optical axis of the system through motor **167**.

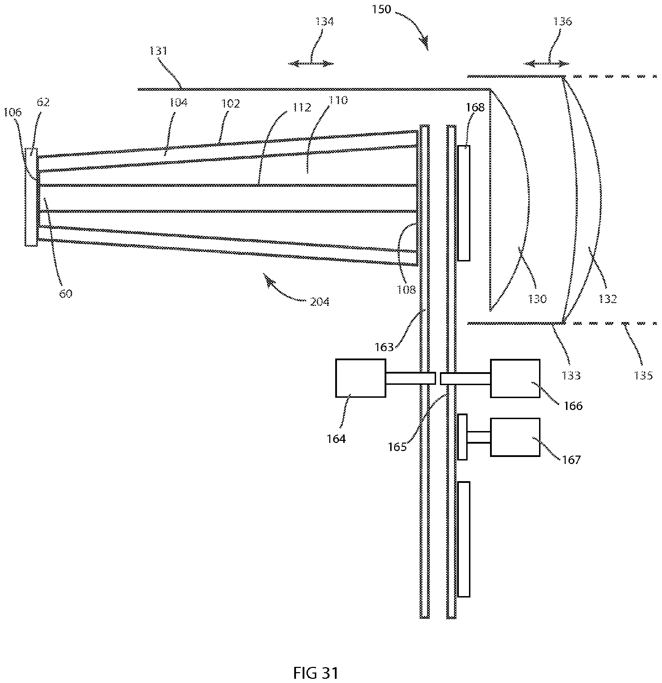

**Figure 31** illustrates both a full static gobo wheel and a full rotating gobo wheel as fitted as gobo system **150** to a preferred embodiment of the invention. Gobo wheel **163** may be rotated through motor **164** in order to select different gobo patterns in front of exit aperture **108**. In yet further embodiments individual gobo patterns may be further rotated about their axes by supplementary motors in order to provide a moving rotating image. Such rotating gobo wheels arc well known in the art. Rotating gobo wheel, **165**, is an example of such an embodiment. Rotating gobo wheel **165** may be rotated through motor **166** in order to select different gobo patterns **168** in front of exit aperture **108**. Gobo patterns **168** may then be rotated about the optical axis of the system through motor **167**.

In all embodiments both the static and rotating gobo patterns may be of any shape and may include colored images or transparencies. Additionally effects such as prisms, lenticular lenses, or break up glasses may be used without departing from the invention. For example, the use of a lenticular lens may provide an elliptical beam from each light integrator and rotating that lenticular lens may rotate the elliptical beam about its optical axis. Cooperatively or independently rotating such lenticular lenses on a luminaire with multiple light integrators such as that illustrated in **Figure 29**, may provide new dynamic lighting effects for the operator.

## Claims

1. Automated luminaire, comprising:
multiple LED sources (60, 64);
an elongated integrator (102);
a gobo carrier (154, 163, 165) which carries a plurality of gobo light patterns (168, 172-178);
a receiving lens (120, 130); and
an output lens (122, 132),
wherein the automated luminaire is configured such that the multiple LED sources (60, 64) feed light into the elongated integrator (102), the output of which feeds light via the gobo carrier (154, 163, 165) to the receiving lens (120, 130), the receiving lens (120, 130) in-turn feeding light to the output lens (122, 132),
**characterized in that** the receiving lens (120,130) is protected by an elongated receiving lens spill shield (131), wherein the elongated receiving lens spill shield (131) is attached to and moves with the receiving lens (120, 130), and the output lens (122, 132) is protected by an elongated output lens spill shield (133), wherein the elongated output lens spill shield (133) is attached to and moves with the output lens (122, 132),
wherein the receiving lens spill shield (131) is of a smaller diameter than the output lens spill shield (133) such that the receiving lens (130) and its attached receiving lens spill shield (131) may move within the output lens spill shield (133) such that the lenses may move to be adjacent, and
wherein the receiving lens spill shield (131) encloses at least partially the gobo carrier (154) and the elongated integrator (102).

2. The automated luminaire of Claim 1, wherein the receiving lens spill shield (131) is nested in the output lens spill shield (133).

3. The automated luminaire of claim 1 or 2, wherein the elongated light integrator (102) has a square input cross section and a hexagonal output cross section.

4. The automated luminaire of claim 1 or 2, wherein the elongated light integrator (102) has a square input cross section and an octagonal output cross section.

5. The automated luminaire of any one of the preceding claims, wherein the gobo carrier (165) can articulate the gobos (168, 182) to rotate about the center of the gobo(s) (168, 182).

6. The automated luminaire of any one of the preceding claims, wherein the gobo carrier (154, 163, 165) comprises one or more of a static gobo carrier or a rotating gobo carrier.

## Patentansprüche

1. Automatisierte Leuchte, Folgendes umfassend:
mehrere LED-Quellen (60, 64);
einen länglichen Integrator (102);
einen Goboträger (154, 163, 165), der mehrere Gobolichtmuster (168, 172-178) trägt;
eine Empfangslinse (120, 130); und
eine Austrittslinse (122, 132), wobei die automatisierte Leuchte derart konfiguriert ist, dass die mehreren LED-Quellen (60, 64) Licht in den länglichen Integrator (102) einspeisen, dessen Austritt Licht über den Goboträger (154, 163, 165) in die Empfangslinse (120, 130) einspeist, und die Empfangslinse (120, 130) wiederum Licht in die Austrittslinse (122, 132) einspeist, **dadurch gekennzeichnet, dass** die Empfangslinse (120, 130) durch einen länglichen Empfangslinsenraster (131) geschützt ist, wobei der längliche Empfangslinsenraster (131) an der Empfangslinse (120, 130) angebracht ist und sich mit dieser bewegt, und die Austrittslinse (122, 132) durch einen länglichen Austrittslinsenraster (133) geschützt ist, wobei der längliche Austrittslinsenraster (133) an der Austrittslinse (122, 132) angebracht ist und sich mit dieser bewegt, wobei der Empfangslinsenraster (131) einen kleineren Durchmesser als der Austrittslinsenraster (133) aufweist, derart, dass die Empfangslinse (130) und ihr angebrachter Empfangslinsenraster (131) sich innerhalb des Austrittslinsenrasters (133) derart bewegen können, dass die Linsen sich bewegen können, um benachbart zu sein, und wobei der Empfangslinsenraster (131) wenigstens teilweise den Goboträger (154) und den länglichen Integrator (102) einschließt.

2. Automatische Leuchte nach Anspruch 1, wobei der Empfangslinsenraster (131) in dem Austrittslinsenraster (133) verschachtelt ist.

3. Automatische Leuchte nach Anspruch 1 oder 2, wobei der längliche Lichtintegrator (102) einen quadratischen Eintrittsquerschnitt und einen sechseckigen Austrittsquerschnitt aufweist.

4. Automatische Leuchte nach Anspruch 1 oder 2, wobei der längliche Lichtintegrator (102) einen quadratischen Eintrittsquerschnitt und einen achteckigen Austrittsquerschnitt aufweist.

5. Automatisierte Leuchte nach einem der vorhergehenden Ansprüche, wobei der Goboträger (165) die Gobos (168, 182) gelenkig lagern kann, um sich um die Mitte des oder der Gobos (168, 182) zu rotieren.

6. Automatisierte Leuchte nach einem der vorhergehenden Ansprüche, wobei der Goboträger (154, 163, 165) einen statischen Goboträger und/oder einen rotierenden Goboträger umfasst.

## Revendications

1. Luminaire automatisé, comprenant : plusieurs sources DEL (60, 64) ;
un intégrateur allongé (102) ;
un support de gobo (154, 163, 165) qui porte une pluralité de motifs lumineux de gobo (168, 172-178) ;
une lentille réceptrice (120, 130) ; et
une lentille de sortie (122, 132),
le luminaire automatisé étant configuré de telle sorte que les multiples sources de DEL (60, 64) alimentent de la lumière dans l'intégrateur allongé (102), dont la sortie alimente de la lumière par l'intermédiaire du support de gobo (154, 163, 165) à la lentille réceptrice (120, 130), et la lentille réceptrice (120, 130) alimente à son tour de la lumière à la lentille de sortie (122, 132),
**caractérisé en ce que** la lentille réceptrice (120, 130) est protégée par un paralume de lentille réceptrice allongé (131), le paralume de lentille réceptrice allongé (131) étant fixé à et se déplaçant avec la lentille réceptrice (120, 130), et la lentille de sortie (122, 132) étant protégée par un paralume de lentille de sortie allongé (133), le paralume de lentille de sortie allongé (133) étant fixé à et se déplaçant avec la lentille de sortie (122, 132),
le paralume de lentille réceptrice (131) étant d'un diamètre plus petit que le paralume de lentille de sortie (133) de telle sorte que la lentille réceptrice (130) et son paralume de lentille réceptrice fixé (131) peuvent se déplacer dans le paralume de lentille de sortie (133) de telle sorte que les lentilles peuvent se déplacer pour être adjacentes, et le paralume de lentille réceptrice (131) renferme au moins partiellement le support de gobo (154) et l'intégrateur allongé (102).

2. Luminaire automatisé selon la revendication 1, dans lequel le paralume de lentille réceptrice (131) est niché dans le paralume de lentille de sortie (133).

3. Luminaire automatisé selon la revendication 1 ou 2, dans lequel l'intégrateur de lumière allongé (102) a une section transversale d'entrée carrée et une section transversale de sortie hexagonale.

4. Luminaire automatisé selon la revendication 1 ou 2, dans lequel l'intégrateur de lumière allongé (102) a une section transversale d'entrée carrée et une section transversale de sortie octogonale.

5. Luminaire automatisé selon l'une quelconque des revendications précédentes, dans lequel le support de gobo (165) peut articuler les gobos (168, 182) afin qu'ils tournent autour du centre du ou des gobo(s) (168, 182).

6. Luminaire automatisé selon l'une quelconque des revendications précédentes, dans lequel le support de gobo (154, 163, 165) comprend un support de gobo statique et/ou un support de gobo rotatif.
